(19) Europäisches Patentamt
European Patent Office
Office européen des brevets

(11) **EP 1 995 284 A1**

(12) **EUROPEAN PATENT APPLICATION**

(43) Date of publication:
**26.11.2008 Bulletin 2008/48**

(51) Int Cl.:
*C09C 1/42* $^{(2006.01)}$  *D21H 19/40* $^{(2006.01)}$
*D21H 17/68* $^{(2006.01)}$  *C08K 3/34* $^{(2006.01)}$
*C08K 9/06* $^{(2006.01)}$

(21) Application number: **08161984.3**

(22) Date of filing: **18.11.2004**

(84) Designated Contracting States:
**AT BE BG CH CY CZ DE DK EE ES FI FR GB GR HU IE IS IT LI LU MC NL PL PT RO SE SI SK TR**

(30) Priority: **21.11.2003 US 523672 P**

(62) Document number(s) of the earlier application(s) in accordance with Art. 76 EPC:
**04819544.0 / 1 692 230**

(71) Applicant: **Imerys Kaolin, Inc.**
**Dry Branch, GA 31020 (US)**

(72) Inventors:
• **Sare, Edward, J.**
**Macon, GA 31210 (US)**
• **Raper, Stephen, C.**
**Byron, GA 31088 (US)**

(74) Representative: **Reverzani, Cristina**
**Haseltine Lake**
**Theatinerstrasse 3**
**80333 München (DE)**

Remarks:
This application was filed on 07-08-2008 as a divisional application to the application mentioned under INID code 62.

(54) **Rapid dispersing hydrous kaolins**

(57) A composition comprising hydrous kaolins having a particle size distribution meeting the following ratio (I):

$$\frac{(\text{cumulative mass at } 0.5\ \mu m)}{(\text{cumulative mass at } 2\ \mu m)} \le 0.5 \,,$$

a median particle size ($D_{50}$) less than or equal to 2.0 $\mu$m and certain Hegman dispersion according to the "SSM" V-T Alkyd Hegman Test are disclosed. Also disclosed are products, such as inks, paints, polymer products, rubber products, and coatings, using the inventive hydrous kaolins.

**EP 1 995 284 A1**

**Description**

This application claims priority to U.S. Provisional Patent Application No. 60/523,672, filed November 21, 2003.

Consistent with embodiments of the present invention, a composition comprising pulverized hydrous kaolins is disclosed. The pulverized hydrous kaolins disclosed herein can have a particle size distribution that enables the kaolins to exhibit a rapid dispersion in both aqueous medium and non-aqueous medium. The composition disclosed herein can be used in many areas, such as inks, fillers or extenders in paint, plastics, polymers, papermaking, and coatings. More generally, the composition disclosed herein may be used wherever hydrous kaolins are used.

Particulate kaolins occur naturally in the hydrous form and exist as crystalline structures containing hydroxyl functionality. The hydrous kaolins have been widely used in the paper industry. However, because the dispersion rate of the typical hydrous kaolins in aqueous medium and/or non-aqueous medium can be limited, the typical hydrous kaolins may sometimes not be satisfactory in some applications, such as inks, polymers, and coatings.

Therefore, there remains a need for hydrous kaolins capable of exhibiting a high dispersion rate in both aqueous medium and non-aqueous medium, in order to provide an improved rate of makedown in the applications, such as inks, polymers, and coatings. The present inventors have surprisingly discovered that a relatively low portion of the very fine particles can lead to a high rate of dispersion and that pulverized hydrous kaolins having a defined particle size distribution can afford a rapid dispersion in both aqueous medium and non-aqueous medium.

Accordingly, one aspect of the present invention relates to a composition comprising pulverized hydrous kaolins having a particle size distribution with a relatively low portion of fine particles, wherein the relatively low portion of fine particles is defined as a particle size distribution meeting the following ratio:

$$\frac{(\text{cumulative mass at } 0.5 \ \mu\text{m})}{(\text{cumulative mass at } 2 \ \mu\text{m})} \leq 0.5 \ ,$$

and the pulverized hydrous kaolin has a median particle size of, for example, less than or equal to 2.0 μm.

Another aspect of the present invention provides a composition comprising hydrous kaolin having a particle size distribution of the following ratio:

$$\frac{(\text{cumulative mass at } 0.5 \ \mu\text{m})}{(\text{cumulative mass at } 2 \ \mu\text{m})} \leq 0.5 \ ,$$

a median particle size of, for example, less than or equal to 2.0 μm, and a Hegman grind of more than 2 in 3 minutes, such as more than 2.5 in 3 minutes, and more than 3 in 3 minutes, in accordance with the "SSM" V-T Alkyd Hegman Test.

Furthermore, another aspect of the present invention provides a method of preparing the composition disclosed herein, comprising:

pulverizing hydrous kaolins wherein the hydrous kaolins have a particle size distribution meeting the following ratio:

$$\frac{(\text{cumulative mass at } 0.5 \ \mu\text{m})}{(\text{cumulative mass at } 2 \ \mu\text{m})} \leq 0.5 \ ,$$

and a median particle size of, for example, less than or equal to 2.0 μm; and
including the pulverized hydrous kaolins in the composition.

In addition, the present invention further provides a method for increasing the dispersion rate of hydrous kaolins, comprising pulverizing the hydrous kaolins, wherein the hydrous kaolins have a particle size distribution of the following ratio:

$$\frac{(\text{cumulative mass at } 0.5 \ \mu\text{m})}{(\text{cumulative mass at } 2 \ \mu\text{m})} \leq 0.5 \ ,$$

and a median particle size of, for example, less than or equal to 2.0 µm.

Another aspect of the present invention provides products, such as inks, paints, polymers, rubbers, and coatings, comprising the inventive hydrous kaolins as disclosed herein.

Another aspect of the present invention provides a method for measuring the rate of dispersion of a particulate pigment or pigment mixture. This method comprises combining the particulate pigment with an alkyd resin-containing system such as a liquid, non-aqueous vinyl-toluene alkyd resin-containing system, to form an initial pigment-containing mixture; grinding the initial pigment-containing mixture to produce a ground pigment-containing mixture; measuring the relative dispersion of the particulate pigment in the ground pigment-containing mixture; regrinding the ground pigment-containing mixture; and measuring the relative dispersion of the particulate pigment in the reground pigment-containing mixture. In one aspect, the relative dispersions can be measured using a Hegman-grind gauge based method. In another aspect, the relative dispersion can be determined by measuring the gloss and sheen of dry films prepared from the pigment-containing mixture.

The hydrous kaolins that can be used in the present invention can be obtained naturally from various locations, such as from the Rio Capim area of Brazil and Georgia of the United States.

The "particle size distribution" (PSD) disclosed herein is measured by a ratio of: (1) a cumulative mass of particles with a particle size of 0.5 µm to (2) a cumulative mass of particles with a particle size of 2 µm. The PSD of a particulate product, such as the pigment product according to the present invention, can be determined by measuring the sedimentation of the particulate product in a fully dispersed condition in a standard aqueous medium, such as water, using a SEDIGRAPH™ instrument, e.g., SEDIGRAPH 5100, obtained from Micromeritics Corporation, USA. The "particle size" of a given particle is expressed in terms of the diameter of a sphere of equivalent diameter, which sediments through the medium, *i.e.,* an equivalent spherical diameter (ESD).

All percentages and amounts expressed herein are by weight. All amounts, percentages, and ranges expressed herein are approximate.

In one embodiment, the inventive hydrous kaolin disclosed herein has a median particle size of less than or equal to 2 µm. For example, the median particle size can range from 0.5 µm to 1.5 µm, such as greater than 0.5 µm but less than 1.5 µm, or less than 1 µm. The median particle size can also, for example, be less than 2 µm but greater than 0.4 µm.

The inventive hydrous kaolin disclosed herein can have a high dispersion rate in both aqueous medium and non-aqueous medium. As disclosed herein, the "aqueous medium" means a water-based medium, and more generally a polar, hydrophilic medium. The "non-aqueous medium" means a generally non-polar, hydrophobic medium. Optionally, both the aqueous medium and the non-aqueous medium can comprise at least one soluble organic solvent chosen, for example, from ketones, esters, and alcohols. Additionally, the medium can comprise emulsions of water and insoluble organic solvents, for example, hydrocarbons.

As disclosed herein, pulverization can be achieved by any process known to one of ordinary skill in the art, for example, using Bauer mills or air classification mills (ACMs).

Even further disclosed herein are products, such as inks; paints, such as matte paints; polymer products; rubber products; and coatings, such as non-aqueous coatings for paper, using the inventive hydrous kaolins.

In one embodiment, the present invention provides an ink comprising, in an appropriate medium, the inventive hydrous kaolins disclosed herein. The "ink" disclosed herein can be chosen from aqueous inks and non-aqueous inks, including, for example, gravure inks, heat-set inks, lithographic printing inks, and newsprint inks. The inventive hydrous kaolins disclosed herein can serve, for example, as a pigment in the ink and can provide economic advantage to the ink product, as they can exhibit high dispersion rate in both aqueous medium and non-aqueous medium.

The appropriate medium in the ink disclosed herein can be chosen from aqueous media and non-aqueous media conventionally used in the art.

Depending on the final applications of the ink, the ink disclosed herein can further comprise at least one component chosen, for example, from resins, such as vinyl resins; polymers; additives, such as rheology modifiers, surfactants, and drying accelerating agents such as sodium lauryl sulfate, N,N-diethyl-m-toluamide, cyclohexylpyrrolidinone and butyl carbitol; fillers; diluents; humectants, such as ethylene glycol, propylene glycol, diethylene glycols, glycerine, dipropylene glycols, polyethylene glycols, polypropylene glycols, amides, ethers, carboxylic acids, esters, alcohols, organosulfides, organosulfoxides, sulfones, alcohol derivatives, carbitol, butyl carbitol, cellosolve, ether derivatives, amino alcohols, and ketones; and biocides, such as benzoates, sorbates, and isothiazolones. The ink product can further comprise at least one additional pigment chosen from those conventionally used in the art.

The amount of inventive hydrous kaolin in a given ink can vary greatly based on the formulation of the ink, as would be apparent to one of ordinary skill in the art. For example, in some embodiments, the inventive hydrous kaolin can be present in an amount ranging from 5% to 45% by weight of the ink as formulated.

In another embodiment, the present invention provides a paint, such as an aqueous or non-aqueous industrial coating, architectural paint, deco paint, or art paint, comprising, in an appropriate medium, the inventive hydrous kaolins disclosed herein. The inventive hydrous kaolins disclosed herein can serve, for example, as a gloss control agent pigment in the paint. The inventive hydrous kaolin can generally be present in an amount less than the critical pigment volume. However, the inventive pigments can also be present in higher pigment volume concentrations, such as in the range of 1% to 80% by weight on a dry film basis.

The paint disclosed herein can further comprise at least one component chosen from binders, such as polymeric binders, for example, water dispersible binders chosen, for example, from polyvinyl alcohol (PVA) and latex; and additives conventionally used in paints, chosen, for example, from surfactants, thickeners, biocides, defoamers, wetting agents, dispersants, and coalescents. The paint disclosed herein can comprise at least one additional pigment chosen, for example, from $TiO_2$ and calcium carbonate.

In another embodiment, the present invention provides a polymer product comprising the inventive hydrous kaolins disclosed herein. The inventive hydrous kaolin can be present at a concentration of up to 60% by weight of the polymer as compounded and up to 30% by weight of the final polymer article. The inventive hydrous kaolin can be used both for resin extension (i.e., filling), $TiO_2$ extension, and reinforcement of the polymer.

The polymer product disclosed herein comprises at least one polymer resin. The term "resin" means a polymeric material, either solid or liquid, prior to shaping into a plastic article. The at least one polymer resin used in the present invention is one which, on cooling (in the case of thermoplastic plastics) or curing (in the case of thermosetting plastics), can form a plastic material.

The at least one polymer resin, which can be used in the present invention, can be chosen, for example, from polyolefin resins, polyamide resins, polyester resins, engineering polymers, allyl resins, thermoplastic resins, and thermoset resins.

In another embodiment, the present invention provides a rubber product comprising the inventive hydrous kaolins disclosed herein. The inventive hydrous kaolin composition can provide the benefits of resin extension, reinforcement of the rubber, and increased hardness of the rubber composition. The rubber product disclosed herein comprises at least one rubber chosen from natural rubbers and synthetic rubbers. For example, sulphur-vulcanizable rubbers, which can be used for manufacture of tire treads can be used in the present invention. Examples of the synthetic rubbers, which may be used in the present invention, include, but are not limited to, styrene-butadiene rubber (SBR), vinyl-styrene-butadiene rubber (VSBR), butadiene rubber (BR), and neoprene rubber or polyisoprene. The SBR may be emulsion SBR (E-SBR) or solution SBR (S-SBR). The VSBR may be solution VSBR (S-VSBR). And examples of the BR include, but are not limited to, cis-1,3-polybutadiene rubber and cis-1,4-polybutadiene rubber. An example of the natural rubbers, which can be used in the present invention, is Standard Malaysian natural rubber.

The rubber product disclosed herein may further comprise at least one additive chosen from conventional additives used in the art, for example, extender oils and mineral and synthetic fillers. The rubber product can include the inventive hydrous kaolin in an amount up to 35% by weight as formulated.

In another embodiment, the present invention provides a coating, such as a non-aqueous coating for paper or paperboard, comprising the inventive hydrous kaolins disclosed herein. The coating can further comprise at least one binder chosen from binders conventionally used in the art. Exemplary binders include, but are not limited to, adhesives derived from natural starch and synthetic binders, including, for example, styrene butadiene, acrylic latex, vinyl acetate latex, or styrene acrylic, casein, polyvinyl alcohol, polyvinyl acetate, or mixtures thereof.

Paper and paperboard coatings may have different binder levels depending on the end use of the coated product. Appropriate binder levels based upon the desired end product would be readily apparent to the skilled artisan. For example, binder levels can be controlled to allow the surfaces to receive ink without disruption. The latex binder levels for paper or paperboard coatings generally range from 3% to 30% by weight relative to the total weight of the coating. For example, the at least one binder can be present in an amount ranging from 3% to 30%, such as from 10% to 30%, by weight relative to the total weight of the coating. Paper or paperboard coatings can include the inventive hydrous kaolins in an amount ranging from about 3% to about 95% by weight on a dry coating basis.

The present invention is further illuminated by the following nonlimiting examples, which are intended to be purely exemplary of the invention.

## EXAMPLES

In the following Examples, the particle size data were determined using SEDIGRAPH 5100 in water at the standard temperature of 34.9°C.

## Example 1

The particle size distributions of four samples of hydrous kaolins are shown in Table I below. In this Example, Samples I and II are two conventional particle pulverized products generally considered to exhibit good dispersion in aqueous and non-aqueous systems. Inventive samples A and B were made according to the present invention from spray-dried Brazilian-based products. These inventive hydrous kaolins were pulverized using conditions known to simulate typical pulverization conditions including multiple passes through a laboratory micromill sold by Mikro Samplmil Mikropul, a division of Slick Corporation, located in Summit, New Jersey. Pulverization was accomplished by passing the sample through the micromill 3 times, using a 340 mesh screen.

TABLE I

| Particle Size Distribution | Hydrous Kaolin | | | |
|---|---|---|---|---|
| | Conventional I | Conventional II | Inventive A | Inventive B |
| 5 $\mu$m | 99.6 | 98.3 | 99.0 | 96.6 |
| 2 $\mu$m | 93.5 | 90.4 | 89.6 | 79.6 |
| 1 $\mu$m | 82.3 | 79.5 | 71.3 | 56.1 |
| 0.5 $\mu$m | 65.0 | 61.5 | 43.5 | 30.5 |
| Median $\mu$m | 0.35 | (0.4) | 0.58 | 0.84 |
| Ratio[1] | 0.7 | 0.7 | 0.5 | 0.4 |

$$^{1}\frac{Cumulative\ mass\ at\ 0.5\,\mu m}{Cumulative\ mass\ at\ 2\,\mu m} \leq 0.5 \ .$$

The results shown in Table I indicate that inventive Samples A and B according to the present invention have a particle size distribution meeting the following ratio:

$$\frac{(cumulative\ mass\ at\ 0.5\ \mu m)}{(cumulative\ mass\ at\ 2\ \mu m)} \leq 0.5 \ ;$$

while the conventional pulverized Samples I and II, which are not according to the present invention, do not have such a particle size distribution.

A comparative dispersion test of these four samples was conducted using the "SSM" V-T Alkyd Hegman Test. In the "SSM" V-T Alkyd Hegman Test, a pigment containing mixture as set forth in Table II was first prepared:

Table II

| Material | Volume (gal.) | Weight (lbs). | Weight % |
|---|---|---|---|
| Resin[1] | 286.2 | 2160.7 | 74.1 |
| Solvent[2] | 93.3 | 589.6 | 20.2 |
| Anti-Settling Agent[3] | 1.9 | 13.6 | 0.5 |
| Organoclay Rheology Modifier[4] | 1.1 | 13.6 | 0.5 |
| Dispersant[5] | 2.1 | 18.1 | 0.6 |
| Dryer I[6] | 0.8 | 6.8 | 0.2 |
| Dryer II[7] | 4.0 | 36.3 | 1.2 |
| Anti Skin[8] | 1.2 | 9.1 | 0.3 |

(continued)

| Material | Volume (gal.) | Weight (lbs). | Weight % |
|---|---|---|---|
| Solvent[9] | 9.4 | 68.3 | 2.3 |
| [1] Vinyl Toluene Resin (60%) = VT Alkyd (Polychem 6693-60) [2] Odorless Mineral Spirits [3] MPA-2000X [4] Bentone SD1 [5] Nuosperse 657 [6] Cobalt, 12% [7] Zirconium, 18% [8] Methyl, Ethyl Ketoxine [9] Toluene | | | |

In the base formulation, it is understood that:

the solids concentration is 45.9% by weight relative to the total weight of the base formulation; and
the solids concentration is 37.8% by volume relative to the total volume of the base formulation.
A final formulation as set forth in the following chart, was then prepared by addition of the pigment (i.e., the hydrous kaolin sample) to the base formulation:

| Material | Volume (gal.) | Weight (lbs.) | Weight % |
|---|---|---|---|
| Base Formulation | 20.6 | 149.2 | 60.2 |
| Pigment[1] | 4.4 | 98.5 | 39.8 |
| [1] Hydrous kaolin sample | | | |

In the final formulation of the pigment-containing mixture, it is understood that:

the pigment volume concentration (PVC) is 34.9% relative to the total volume of the final formulation;
the solids concentration is 69.0% by weight relative to the total weight of the final formulation; and
the solids concentration is 50.2% by volume relative to the total volume of the final formulation.

In the dispersion test, a simulated sand mill was used for grinding. Specifically, approximately 250 g of glass beads, Potters Industries A-Series, Tech Quality Glass Spheres, A-205 (nominal 2 mm diameter) were added to a 500 ml HDPE screw-top cylindrical sample bottle, along with nominally the same weight of the final formulation. The pigment-containing mixture then underwent grinding using a mechanical agitator, Red Devil Model 5400 Paint Shaker for certain period of time (grind time) as specified. Dispersion was measured as a function of time using a standard Hegman Grind gauge with Hegman National Standard ranging from 0 to 8, wherein the higher number of the Hegman Grind value, the higher the relative degree of dispersion. The results are shown in Table III.

Table III

| Grind[1] Time, Minutes | Conventional Examples | | Inventive Examples | |
|---|---|---|---|---|
| | I | II | A | B |
| | Hegman Grind Value | | | |
| 1 | 0.0 | 0.0 | 1.0 | 5.0 |
| 2 | 0.0 | 0.0 | 3.5 | 5.0 |
| 3 | 0.0 | 0.0 | 5.0 | 5.0 |
| 4 | 0.0 | 0.0 | 5.0 | 5.0 |
| 5 | 0.0 | 1.5 | 5.0 | 5.0 |
| 6 | 1.5 | 1.5 | 5.0 | 5.0 |
| 7 | 2.5 | 3.0 | 5.0 | 5.0 |

(continued)

| Grind[1] Time, Minutes | Conventional Examples | | Inventive Examples | |
|---|---|---|---|---|
| | I | II | A | B |
| 8 | 3.0 | 5.0 | 5.0 | 5.0 |
| 9 | 3.5 | 5.0 | 5.0 | 5.0 |
| 10 | 4.5 | 5.0 | 5.0 | 5.0 |
| 15 | 5.0 | 5.0 | 5.0 | 5.0 |
| [1] Simulated Sand Mill | | | | |

The results shown in Table III indicate that inventive Samples A and B have a higher dispersion rate than conventional Samples I and II.

Furthermore, the film properties were measured for the four samples after drying overnight. Gloss and sheen were measured in a known manner using a Hunter Pro-3 Gloss Meter. The results are shown in Table IV:

Table IV

| | Conventional Examples | | inventive Examples | |
|---|---|---|---|---|
| | I | II | A | B |
| 1 Minute Grind[1] | | | | |
| 20˚ Gloss | 16.7 | 17.8 | 26.6 | 14.1 |
| 60˚ Gloss | 55.2 | 59.9 | 71.5 | 58.1 |
| 85˚ Sheen | 58.2 | 70.5 | 87.4 | 85.8 |
| 5 Minute Grind[1] | | | | |
| 20˚ Gloss | 24.4 | 24.3 | 30.2 | 16.4 |
| 60˚ Gloss | 70.2 | 70.5 | 76.4 | 63.1 |
| 85˚ Sheen | 87.3 | 88.5 | 92.7 | 85.7 |
| 10 Minute Grind[1] | | | | |
| 20˚ Gloss | 34.9 | 31.7 | 33.1 | 18.0 |
| 60˚ Gloss | 78.0 | 76.6 | 77.7 | 64.5 |
| 85˚ Sheen | 90.1 | 90.0 | 92.7 | 87.7 |
| 15 Minute Grind[1] | | | | |
| 20˚ Gloss | 36.5 | 29.8 | 41.8 | 22.0 |
| 60˚ Gloss | 80.5 | 75.1 | 83.4 | 69.6 |
| 85˚ Sheen | 91.6 | 91.3 | 94.3 | 90.0 |
| [1] Simulated Sand Mill | | | | |

The results shown in Table IV indicate that inventive Samples A and B and conventional Samples I and II have good non-aqueous dispersion properties.

Example 2

To confirm that the improved dispersion rate is related to a reduced fine distribution, the particle size distributions of six samples of hydrous kaolins were measured. The results are shown in Table V. In this Example, Samples II, III and IV are conventional pulverized hydrous kaolin products known to have high dispersion in non-aqueous medium. Sample II is the same as that in Example I. Samples C, D, and E are samples made according to the present invention using Brazilian kaolins and Georgia kaolins, and were pulverized by laboratory pulverization under the same conditions as set forth in Example 1.

Table V

| Particle Size Distribution | Conventional Examples | | Inventive Examples | | | Conventional Example |
|---|---|---|---|---|---|---|
| | II | III | C | D | E | IV |
| 5 μm | 98.3 | 81.1 | 97.3 | 97.5 | 98.6 | 98.4 |
| 2 μm | 90.4 | 91.4 | 87.0 | 76.3 | 94.2 | 97.0 |
| 1 μm | 79.5 | 78.9 | 68.0 | 52.2 | 79.4 | 94.9 |
| 0.5 μm | 61.9 | 59.6 | 39.0 | 27.3 | 49.9 | 86.4 |
| Median μm | (0.4) | (0.4) | 0.6 | 0.9 | 0.5 | (<0.3) |
| Ratio[1] | 0.7 | 0.7 | 0.5 | 0.4 | 0.5 | 0.9 |

$$^1 \frac{Cumulative\ mass\ at\ 0.5\ \mu m}{Cumulative\ mass\ at\ 2\ \mu m} \leq 0.5$$

The dispersion rate and film properties of these six samples were also measured according to the methods disclosed in Example I. The results are shown in Table VI and Table VII, respectively;

Table VI

| Grind[1] Time, Minutes | Conventional Examples | | Inventive Examples | | | Conventional Example |
|---|---|---|---|---|---|---|
| | II | III | C | D | E | IV |
| | Hegman Grind Value | | | | | |
| 1 | 0.00 | 0.00 | 2.00 | 2.00 | 2.50 | 0.00 |
| 2 | 0.00 | 0.00 | 3.00 | 2.50 | 3.50 | 0.00 |
| 3 | 0.00 | 1.00 | 3.50 | 2.50 | 4.00 | 0.00 |
| 4 | 1.00 | 3.00 | 3.50 | 3.50 | 4.50 | 0.00 |
| 5 | 3.00 | 4.00 | 4.00 | 3.50 | 4.50 | 0.00 |
| 6 | 3.50 | 4.50 | 4.50 | 4.00 | 4.50 | 0.50 |
| 7 | 4.50 | 5.00 | 5.00 | 4.50 | 4.50 | 1.00 |
| 8 | 5.00 | 5.00 | 5.00 | 5.00 | 4.50 | 1.50 |
| 9 | 5.00 | 5.00 | 5.00 | 5.00 | 4.50 | 2.00 |
| 10 | 5.00 | 5.00 | 5.00 | 5.00 | 5.00 | 2.00 |
| 15 | 5.00 | 5.00 | 5.00 | 5.00 | 5.00 | 2.50 |
| [1] Simulated Sand Mill | | | | | | |

Table VII

| | Conventional Examples | | Inventive Examples | | | Conventional Example |
|---|---|---|---|---|---|---|
| | II | III | C | D | E | IV |
| 1 Minute Grind[1] | | | | | | |
| 20° Gloss | 18.2 | 20.0 | 23.7 | 11.8 | 11.8 | 11.0 |
| 60° Gloss | 61.9 | 62.6 | 70.8 | 53.4 | 52.7 | 44.1 |

(continued)

|  | Conventional Examples | | Inventive Examples | | | Conventional Example |
|---|---|---|---|---|---|---|
|  | II | III | C | D | E | IV |
| 1 Minute Grind[1] | | | | | | |
| 85˚ Sheen | 78.4 | 72.9 | 89.1 | 77.8 | 72.8 | 46.7 |
| 5 Minute Grind[1] | | | | | | |
| 20˚ Gloss | 19.8 | 24.8 | 25.7 | 15.7 | 15.7 | 18.0 |
| 60˚ Gloss | 69.2 | 71.9 | 71.9 | 59.0 | 58.0 | 63.1 |
| 85˚ Sheen | 87.5 | 88.5 | 89.9 | 81.2 | 76.4 | 79.6 |
| 10 Minute Grind[1] | | | | | | |
| 20˚ Gloss | 23.3 | 27.9 | 31.2 | 15.0 | 18.0 | 21.8 |
| 60˚ Gloss | 69.9 | 73.7 | 77.8 | 59.7 | 62.7 | 66.4 |
| 85˚ Sheen | 87.8 | 89.6 | 92.2 | 82.4 | 80.0 | 82.3 |
| 15 Minute Grind[1] | | | | | | |
| 20˚ Gloss | 27.5 | 28.5 | 31.2 | 18.0 | 21.1 | 22.7 |
| 60˚ Gloss | 73.7 | 75.4 | 78.1 | 63.1 | 65.3 | 68.7 |
| 85˚ Sheen | 90.1 | 90.2 | 92.3 | 83.4 | 81.4 | 84.2 |
| [1]Simulated Sand Mill | | | | | | |

The results shown in Table VI indicate that the inventive Samples C, D, and E have higher dispersion rates than conventional Samples II, III, and IV, The results shown in Table VII indicate that inventive Samples C, D, and E and conventional Samples II, III, and IV have good non-aqueous dispersion properties.

## Example 3

To demonstrate the effect of pulverization, the dispersion rates of the non-pulverized, spray-dried feeds were measured and compared directly to the corresponding pulverized samples C and D according to the present invention. The dispersion rate was measured according to the test disclosed in Example 1. The results are shown in Table VIII:

**Table VIII**

| Grind[1] Time, Minutes | Spray-Dried Feed C | Inventive Sample C | Spray-Dried Feed D | Inventive Sample D |
|---|---|---|---|---|
| Hegman Grind | | | | |
| 1 | 0.0 | 2.00 | 0.0 | 3.00 |
| 2 | 0.0 | 2.00 | 0.0 | 3.00 |
| 3 | 0.0 | 3.00 | 0.0 | 3.50 |
| 4 | 0.0 | 3.50 | 0.0 | 3.50 |
| 5 | 0.0 | 4.00 | 0.0 | 4.50 |
| 6 | 0.0 | 4.50 | 0.0 | 5.00 |
| 7 | 0.0 | 5.00 | 0.0 | 5.00 |
| 8 | 0.0 | 5.00 | 0.0 | 5.00 |
| 9 | 0.0 | 5.00 | 0.0 | 5.00 |

(continued)

| Grind[1] Time, Minutes | Spray-Dried Feed C | Inventive Sample C | Spray-Dried Feed D | Inventive Sample D |
|---|---|---|---|---|
| Hegman Grind | | | | |
| 10 | 0.0 | 5.00 | 0.0 | 5.00 |
| [1]Simulated Sand Mill | | | | |

The results shown in Table VIII indicate the effect of pulverization, namely, that pulverized samples have higher dispersion rates than their corresponding non-pulverized samples. These results are shown with respect to the Hegman Grind value, wherein the higher number reflects a relative higher degree of dispersion.

Example 4

The effect of pulverization was again demonstrated in Example 4. The dispersion rate was measured according to the test disclosed in Example 1, except that in measuring the dispersion rate, a high-speed, Cowles-type mixer was used in place of the simulated sand mill. The results are shown in Table IX:

Table IX

| Grind[1] Time, Minutes | Spray-Dried Feed C | Inventive Sample C | Spray-Dried Feed D | Inventive Sample D |
|---|---|---|---|---|
| | Hegman Grind | | | |
| 1 | 0.0 | 2.00 | 0.0 | 4.00 |
| 5 | 0.0 | 4.50 | 0.0 | 5.00 |
| 10 | 0.0 | 5.00 | 0.0 | 5.00 |
| 15 | 0.0 | 5.00 | 0.0 | 5.00 |
| 20 | 0.0 | 5.00 | 0.0 | 5.00 |
| [1] High Speed Cowles Dispersion | | | | |

The results shown in Tables IX indicate the effect of pulverization, namely, that pulverized samples have higher dispersion rates than their corresponding non-pulverized samples regardless which dispersion method was used. These results are shown with respect to the Hegman Grind value, wherein the higher number reflects a relative higher degree of dispersion.

**Example 5**

The effect of pulverization was again demonstrated, this time, on three spray-dried hydrous kaolins. Samples F and G meet the particle size requirements of the present invention. In addition, a conventional spray-dried hydrous kaolin known to have very good dispersion characteristics, but that does not meet the particle size limitations of the present invention, was used as control Sample V. All three spray-dried hydrous kaolin samples were pulverized using a laboratory micropulverizer under conditions shown in Tables X and XI. For example, the screen sizes and numbers of passes through the micro-pulverizer were varied as shown in Table X and XI. In general, the use of a smaller screen and/or a larger number of passes results in a product having better dispersion properties. The dispersion rate and film properties were measured according to the methods disclosed in Example 1. The results are shown in Table X and Table XI, respectively:

Table X

| | Inventive F | | | Inventive G | | | Conventional Control V | | |
|---|---|---|---|---|---|---|---|---|---|
| Screen | Large | Small | Small | Large | Small | Small | Large | Small | Small |
| # of Passes | 1 | 1 | 3 | 1 | 1 | 3 | 1 | 1 | 3 |

(continued)

| Grind[1] Time (Minutes) | Hegman Grind Value | | | | | | | | |
|---|---|---|---|---|---|---|---|---|---|
| 1 | 0,00 | 0.00 | 1.00 | 0.00 | 1.00 | 1.00 | 0.00 | 0.00 | 0.00 |
| 2 | 0.00 | 0.50 | 5.00 | 0.00 | 1.00 | 1.00 | 0.00 | 0.00 | 0.00 |
| 3 | 0.00 | 2.00 | 5.00 | 0.00 | 1.50 | 1.50 | 0.00 | 0.00 | 0.00 |
| 4 | 0.00 | 2.00 | 5.00 | 0.00 | 1.50 | 1.50 | 0.00 | 0.00 | 0.00 |
| 5 | 0.00 | 2.00 | 5.00 | 0.00 | 2.00 | 2.00 | 0.00 | 0.00 | 0.50 |
| 6 | 0.00 | 2.00 | 5.00 | 0.00 | 2.00 | 2.00 | 0.00 | 0.00 | 1.00 |
| 7 | 0.00 | 2.00 | 5.00 | 0.00 | 3.00 | 3.00 | 0.00 | 0.00 | 1.50 |
| 8 | 0.00 | 2.00 | 5.00 | 0.00 | 3.00 | 4.00 | 0.00 | 0.00 | 2.50 |
| 9 | 0.00 | 2.50 | 5.00 | 0.00 | 3.50 | 5.00 | 0.00 | 0.00 | 4.00 |
| 10 | 0.00 | 3.00 | 6.00 | 0.00 | 3.50 | 5.50 | 0.00 | 0.00 | 5.00 |
| 15 | 0.00 | 3.00 | 6.00 | 0.00 | 3.50 | 6.00 | 0.00 | 0.00 | 6.00 |
| [1] Simulated Sand Mill | | | | | | | | | |

Table XI

| | Inventive F | | | Inventive G | | | Conventional Control V | | |
|---|---|---|---|---|---|---|---|---|---|
| Screen | Large | Small | Small | Large | Small | Small | Large | Small | Small |
| # of Passes | 1 | 1 | 3 | 1 | 1 | 3 | 1 | 1 | 3 |
| 1 Minute Grind[1] | | | | | | | | | |
| 20˚ Gloss | 17.4 | 22.6 | 30.5 | 16.3 | 16.7 | 19.4 | 8.4 | 10.0 | 21.1 |
| 60˚ Gloss | 59.2 | 69.0 | 76.5 | 60.0 | 61.0 | 67.2 | 37.9 | 44.1 | 65.1 |
| 85˚ Sheen | 70.1 | 85.9 | 94.1 | 73.3 | 81.2 | 87.4 | 39.2 | 52.4 | 79.3 |
| 5 Minute Grind[1] | | | | | | | | | |
| 20˚ Gloss | 18.0 | 26.5 | 32.8 | 17.4 | 20.3 | 22.4 | 10.3 | 10.8 | 23.4 |
| 60˚ Gloss | 60.5 | 71.9 | 79.0 | 62.8 | 66.3 | 69.8 | 42.7 | 47.0 | 68.7 |
| 85˚ Sheen | 73.0 | 87.3 | 95.4 | 77.5 | 84.4 | 89.2 | 46.7 | 59.6 | 86.8 |
| 10 Minute Grind[1] | | | | | | | | | |
| 20˚ Gloss | 22.6 | 24.6 | 31.3 | 21.4 | 22.6 | 23.1 | 11.8 | 15.4 | 28.7 |
| 60˚ Gloss | 66.2 | 71.0 | 77.5 | 67.5 | 70.3 | 71.8 | 45.7 | 53.9 | 73.8 |
| 85˚ Sheen | 77.6 | 88.8 | 96.2 | 81.8 | 87.6 | 91.2 | 48.9 | 66.3 | 90.7 |
| 15 Minute Grind[1] | | | | | | | | | |
| 20˚ Gloss | 23.7 | 29.1 | 37.3 | 23.2 | 22.5 | 30.8 | 14.0 | 14.9 | 31.3 |
| 60˚ Gloss | 67.4 | 74.7 | 82.4 | 68.3 | 69.7 | 77.2 | 48.5 | 54.1 | 75.7 |
| 85˚ Sheen | 77.3 | 90.5 | 95.8 | 83.6 | 88.1 | 92.8 | 51.3 | 67.9 | 91.5 |
| [1] Simulated Sand Mill | | | | | | | | | |

The results indicate the effect of pulverization, namely, that the relative rate of dispersion indicated by the Hegman Grind value is also dependent on the degree of pulverization. Samples that have undergone more thorough pulverization have higher dispersion rate than the same samples that have undergone less thorough pulverization. Even under the same pulverization conditions, the inventive samples according to the present invention have a higher dis-

person rate than the conventional sample.

In addition, as shown in Table XI, the inventive Samples F and G, which underwent pulverization with a small screen and one pass show similar film properties as the conventional control Sample V that underwent pulverization with a small screen and three passes.

Unless otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present invention.

**Claims**

1. A composition comprising hydrous kaolin, wherein the hydrous kaolin has a particle size distribution of the following ratio:

$$\frac{(\text{cumulative mass at } 0.5\ \mu m)}{(\text{cumulative mass at } 2\ \mu m)} \leq 0.5,$$

a median particle size ($D_{50}$) less than or equal to 2.0 $\mu$m, and a Hegman grind of more than 2 in 3 minutes using "SSM" V-T Alkyd Hegman Test.

2. The composition according to claim 1, wherein the hydrous kaolin has a Hegman grind of more than 2.5 in 3 minutes using the "SSM" V-T Alkyd Hegman Test.

3. The composition according to claim 2, wherein the hydrous kaolin has a Hegman grind of more than 3 in 3 minutes using the "SSM" V-T Alkyd Hegman Test.

4. The composition according to Claim 1, wherein the hydrous kaolin has a median particle size ($D_{50}$) ranging from 0.5 $\mu$m to 1.5 $\mu$m.

5. The composition according to claim 1, wherein the hydrous kaolin has a median particle size ($D_{50}$) of less than 2.0 $\mu$m and greater than 0.4 $\mu$m.

6. The composition according to claim 4, wherein the hydrous kaolin has a median particle size ($D_{50}$) of less than 1.0 $\mu$m and greater than 0.5 $\mu$m.

7. An ink comprising, in an appropriate medium, hydrous kaolin, wherein the hydrous kaolin has a particle size distribution of the following ratio:

$$\frac{(\text{cumulative mass at } 0.5\ \mu m)}{(\text{cumulative mass at } 2\ \mu m)} \leq 0.5,$$

a median particle size ($D_{50}$) less than or equal to 2.0 $\mu$m, and a Hegman grind of more than 2 in 3 minutes using "SSM" V-T Alkyd Hegman Test.

8. The ink according to claim 7, wherein the appropriate medium is chosen from aqueous media and non-aqueous media.

9. The ink according to claim 7, wherein the ink is chosen from gravure inks, heat-set inks, lithographic printing inks, and newsprint inks.

**10.** The ink according to claim 7, further comprising at least one component chosen from resins, polymers, additives, fillers, diluents, humectants, lecithin, and biocides.

**11.** The ink according to claim 7, further comprising at least one pigment.

**12.** A paint comprising, in an appropriate medium, hydrous kaolin, wherein the hydrous kaolin has a particle size distribution of the following ratio:

$$\frac{(\text{cumulative mass at } 0.5\ \mu m)}{(\text{cumulative mass at } 2\ \mu m)} \leq 0.5 \ ,$$

a median particle size ($D_{50}$) less than or equal to 2.0 $\mu$m, and a Hegman grind of more than 2 in 3 minutes using "SSM" V-T Alkyd Hegman Test.

**13.** The paint according to claim 12, wherein the paint is chosen from architectural paints, deco paints, art paints, and industrial coatings.

**14.** The paint according to claim 12, wherein the paint has a pigment volume concentration in the range of 1%-80%.

**15.** The paint composition of claim 12, wherein the paint has a pigment volume concentration below its critical pigment volume concentration.

**16.** The paint according to claim 12, further comprising at least one component chosen from binders and additives.

**17.** The paint according to claim 12, further comprising at least one pigment.

**18.** A polymer product comprising hydrous kaolin, wherein the hydrous kaolin has a particle size distribution of the following ratio:

$$\frac{(\text{cumulative mass at } 0.5\ \mu m)}{(\text{cumulative mass at } 2\ \mu m)} \leq 0.5 \ ,$$

a median particle size ($D_{50}$) less than or equal to 2.0 $\mu$m, and a Hegman grind of more than 2 in 3 minutes using "SSM" V-T Alkyd Hegman Test.

**19.** A rubber product comprising hydrous kaolin, wherein the hydrous kaolin has a particle size distribution of the following ratio:

$$\frac{(\text{cumulative mass at } 0.5\ \mu m)}{(\text{cumulative mass at } 2\ \mu m)} \leq 0.5 \ ,$$

a median particle size ($D_{50}$) less than or equal to 2.0 $\mu$m, and a Hegman grind of more than 2 in 3 minutes using "SSM" V-T Alkyd Hegman Test.

**20.** The rubber product according to claim 19, wherein the rubber product comprises at least one rubber chosen from natural rubbers and synthetic rubbers.

**21.** A coating comprising hydrous kaolin, wherein the hydrous kaolin has a particle size distribution of the following ratio:

$$\frac{(\text{cumulative mass at 0.5 μm})}{(\text{cumulative mass at 2 μm})} \leq 0.5 \, ,$$

a median particle size ($D_{50}$) less than or equal to 2.0 μm, and a Hegman grind of more than 2 in 3 minutes using "SSM" V-T Alkyd Hegman Test.

**22.** The coating according to claim 21, wherein the coating is a non-aqueous paper coating.

**23.** The coating according to claim 21, wherein the coating is a paperboard coating.

**24.** The coating according to claim 21, further comprising at least one binder.

Europäisches
Patentamt

European
Patent Office

Office européen
des brevets

## EUROPEAN SEARCH REPORT

Application Number

EP 08 16 1984

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/164117 A1 (GOLLEY CHRISTOPHER R. L ET AL) 4 September 2003 (2003-09-04) | 1-11,21, 22 | INV. C09C1/42 D21H19/40 D21H17/68 C08K3/34 C08K9/06 |
| Y | * paragraphs [0003], [0004], [0044], [0052], [0068] - [0072], [0076] - [0090] * | 18-20, 23,24 | |
| X | WO 03/022933 A (IMERYS PIGMENTS, INC) 20 March 2003 (2003-03-20) * paragraphs [0003] - [0005], [0037] - [0040], [0045] - [0055], [0058]; claims 5-8,46-48; examples 1-9 * | 1-6, 12-17 | |
| Y | WO 03/091323 A (IMERYS MINERALS LIMITED; AGRA-GUTIERREZ, CESAR; GOODMAN, HOWARD; ANSAR) 6 November 2003 (2003-11-06) * page 2, line 15 - line 24 * * page 5, line 32 - page 8, line 12; claim 1; example 1 * | 18 | |
| Y | FR 2 651 002 A (ALMA ATINSKY ARKHITEKTURNO STROI) 22 February 1991 (1991-02-22) * claim 1; examples 1-9 * | 19,20 | TECHNICAL FIELDS SEARCHED (IPC) C09C D21H C08K |
| Y | WO 98/21158 A (ECC INTERNATIONAL INC) 22 May 1998 (1998-05-22) * page 4, lines 30-32; claim 15 * | 23,24 | |

The present search report has been drawn up for all claims

| Place of search | Date of completion of the search | Examiner |
|---|---|---|
| The Hague | 15 October 2008 | Corrias, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 16 1984

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2008

| Patent document cited in search report | Publication date | Patent family member(s) | Publication date |
|---|---|---|---|
| US 2003164117 A1 | 04-09-2003 | US 2005098283 A1 | 12-05-2005 |
| WO 03022933 A | 20-03-2003 | AU 2002323615 B2 | 07-08-2008 |
| | | BR 0210811 A | 22-06-2004 |
| | | CA 2452563 A1 | 20-03-2003 |
| | | CN 1592770 A | 09-03-2005 |
| | | EP 1425351 A2 | 09-06-2004 |
| | | JP 2005502758 T | 27-01-2005 |
| WO 03091323 A | 06-11-2003 | AU 2003224304 A1 | 10-11-2003 |
| | | CN 1646614 A | 27-07-2005 |
| | | EP 1497362 A1 | 19-01-2005 |
| | | JP 2005523966 T | 11-08-2005 |
| | | US 2005239934 A1 | 27-10-2005 |
| FR 2651002 A | 22-02-1991 | CN 1049363 A | 20-02-1991 |
| | | DE 3923940 A1 | 24-01-1991 |
| WO 9821158 A | 22-05-1998 | AU 5252798 A | 03-06-1998 |
| | | BR 9712944 A | 28-03-2000 |
| | | EP 0960078 A1 | 01-12-1999 |
| | | US 5856397 A | 05-01-1999 |

EPO FORM P0459

For more details about this annex : see Official Journal of the European Patent Office, No. 12/82

**EP 1 995 284 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 52367203 P